# EUROPEAN PATENT APPLICATION

(11) **EP 4 647 292 A1**
(43) Date of publication of application: **12.11.2025**
(21) Application number: 24846007.3
(22) Date of filing: 23.07.2024
(51) Int. Cl.: B60L 58/18, H02J 7/34, B60L 3/00

(54) **CHARGING AND DISCHARGING CONTROL APPARATUS, DUAL BATTERY PACK SYSTEM, ELECTRIC VEHICLE AND CHARGING AND DISCHARGING CONTROL METHOD**

(30) Priority: 24.07.2023 KR 20230096260
(71) Applicant: LG Energy Solution, Ltd., Seoul 07335 (KR)
(72) Inventor: LEE, Jung-Hoon, Daejeon 34122 (KR); LEE, Keun-Wook, Daejeon 34122 (KR); CHOI, Yean-Sik, Daejeon 34122 (KR)
(74) Representative: Plasseraud IP
(86) International application number: PCT/KR2024/010615
(87) International publication number: WO 2025/023705

(57) **Abstract**

Disclosed are a charge and discharge control device, a dual battery pack system, an electric vehicle, and a charge and discharge control method. A charge and discharge control device according to the present disclosure is configured to control charging and discharging of a dual battery pack system including a first battery pack and a second battery pack the charge and discharge control device and includes: a first relay connected between the first battery pack and a load; a second relay connected between the second battery pack and the load; a DC/DC converter connected between the second battery pack and the load; a voltage measurement unit configured to measure a first pack voltage of the first battery pack and a second pack voltage of the second battery pack; and a controller configured to control the first relay, the second relay, and the DC/DC converter. The controller controls the DC/DC converter to be turned on during a voltage control requirement period in which a voltage difference between the first pack voltage and the second pack voltage is required to be reduced while operating in a discharge sequence control mode.

## Description

### TECHNICAL FIELD

The present disclosure relates to a technology for controlling charging and discharging of a dual battery pack system and, more specifically, to a device and a method for controlling charging and discharging of a dual battery pack system by utilizing a DC/DC converter, which is provided as a power transmission channel between an auxiliary battery pack and a load, among two battery packs provided for supplying power to a load, for temporary voltage adjustment to suppress the voltage difference between the main battery pack and the auxiliary battery pack or the voltage difference between the auxiliary battery pack and the output of the DC/DC converter.

This application is based on and claims priority from Korean Patent Application No. 10-2023-0096260, filed on July 24, 2023, with the Korean Intellectual Property Office, the disclosure of which is incorporated herein in its entirety by reference.

### BACKGROUND ART

As the demand for portable electronic products such as laptops, video cameras, mobile phones, and the like rapidly increases, and as electric vehicles, energy storage batteries, robots, satellites, and the like are progressively developed, active researches on high-performance batteries capable of being repeatedly charged and discharged are underway.

Currently commercialized batteries include nickel-cadmium batteries, nickel-hydrogen batteries, nickel-zinc batteries, and lithium secondary batteries. Among them, lithium batteries are in the spotlight for their advantages of free charging and discharging due to almost no memory effect, a very low self-discharge rate, and a high energy density, compared to nickel-based batteries.

As the demand for high capacity, such as long-distance driving of electric vehicles, increases day by day, the demand for a so-called "dual battery pack system" that includes two battery packs capable of being connected in parallel is also expanding.

In a dual battery pack system, one of two battery packs may be used as a main battery pack and the other may be used as an auxiliary battery pack. The auxiliary battery pack is intended to supplement the output shortage of the main battery pack in case the main battery pack alone is not enough to supply power to the electric load.

Meanwhile, when one of two battery packs is further electrically connected to the load in the state where the other is electrically connected to the load, if the voltage difference between the two battery packs is excessive, an inrush current may flow between the two battery packs. In this case, the inrush current may damage surrounding circuits as well as the two battery packs. Therefore, voltage control is required before connecting two battery packs in parallel, and in this case, a DC/DC converter or the like may be used.

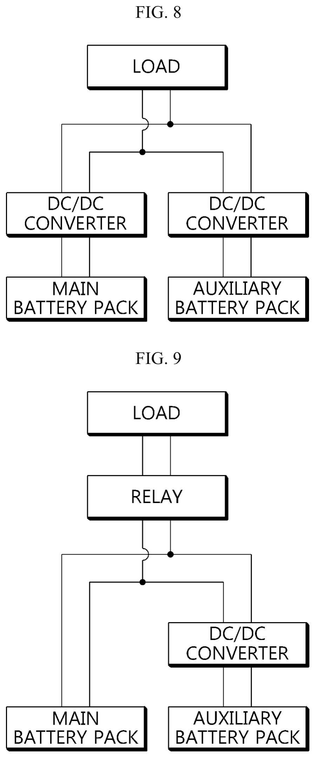

Conventionally, a dual battery pack system according to the so-called active topology shown in FIG. 8 or the semi-active topology shown in FIG. 9 is generally used.

Referring to FIG. 8, the active topology is a method in which two DC/DC converters are connected to the main battery pack and the auxiliary battery pack, respectively, so that two battery packs may be used more actively. Referring to FIG. 9, the semi-active topology is a method in which the DC/DC converter is connected only to the power transmission path between the auxiliary battery pack and the load so that the DC/DC converter is constantly operated while the power of the auxiliary battery pack is supplied to the load.

In both the active topology and the semi-active topology, the output voltage of the auxiliary battery pack is regulated through the DC/DC converter and then supplied to the load. Therefore, the DC/DC converter must be constantly operated while the power of the auxiliary battery pack is supplied to the load.

Accordingly, the output and efficiency of the DC/DC converter have a great influence on the performance of the dual battery pack system.

Specifically, since an increase in the output of the DC/DC converter leads to an increase in its volume, the use of a high-output DC/DC converter consequentially leads to a reduction in the overall capacity of the battery pack. In addition, the high-efficiency DC/DC converter required for the semi-active and active methods is also expensive, which increases the cost of the battery pack system. In addition, since the active topology uses two DC/DC converters, the cost increases, and it is difficult to control the dual battery pack system. In particular, a hybrid dual battery pack system among various types of dual battery pack systems includes two heterogenous battery packs with complementary electrical performance characteristics, so it is more difficult to effectively operate and control the battery packs, compared to other types of dual battery pack systems that include two homogeneous battery packs.

Therefore, a charge and discharge control technology capable of resolving the above-mentioned shortcomings related to the conventional active or semi-active topology is required.

### DISCLOSURE

### Technical Problem

The present disclosure is designed to solve the problems of the related art, and therefore the present disclosure is directed to providing a charge and discharge control device, a dual battery pack system, an electric vehicle, and a charge and discharge control method capable of utilizing a DC/DC converter, which is provided as a power transmission channel between an auxiliary battery pack, among two battery packs provided for power supply to a load, and a load, for temporary voltage adjustment to suppress the voltage difference between the main battery pack and the auxiliary battery pack or the voltage difference between the auxiliary battery pack and the output of the DC/DC converter.

Other purposes and advantages of the present disclosure may be understood by the following description, and will be more clearly understood by the embodiments of the present disclosure. In addition, it will be easily understood that the purposes and advantages of the present disclosure may be realized by the means indicated in the patent claims and combinations thereof.

### Technical Solution

In one aspect of the present disclosure, there is provided a charge and discharge control device for a dual battery pack system including a first battery pack and a second battery pack, which may include: a first relay connected between the first battery pack and a load; a second relay connected between the second battery pack and the load; a DC/DC converter connected between the second battery pack and the load; a voltage measurement unit configured to measure a first pack voltage, which is a voltage between both ends of the first battery pack, and a second pack voltage, which is a voltage between both ends of the second battery pack; and a controller configured to control the first relay, the second relay, and the DC/DC converter on the basis of at least one of the first pack voltage and the second pack voltage.

The controller may be configured to enter a discharge sequence control mode in response to a discharge start command received from a vehicle controller and control the DC/DC converter to be turned on during a voltage control requirement period in which a voltage difference between the first pack voltage and the second pack voltage is required to be reduced while operating in the discharge sequence control mode.

The controller may be configured to, while operating in the discharge sequence control mode, determine whether the first pack voltage is equal to or greater than a first reference voltage and, when the first pack voltage is equal to or greater than the first reference voltage, execute a first discharge stage configured to control the first relay to be turned on so that output power of the first battery pack is supplied to the load through the first relay.

The controller may be configured, when a difference between the first pack voltage and a predetermined second reference voltage, which is less than the first reference voltage, becomes equal to or less than a first predetermined value during execution of the first discharge stage, to set a target value of an output voltage of the DC/DC converter to be equal to the second reference voltage, and then execute a second discharge stage configured to control the DC/DC converter to be turned on so that output power of the second battery pack is supplied to the load through the DC/DC converter.

The controller may be configured to execute a third discharge stage configured to control the first relay to be turned off so that power supply from the first battery pack to the load is cut off when an execution time of the second discharge stage reaches a first configured time.

The controller may be configured to execute a fourth discharge stage configured to control the second relay to be turned on so that the output power of the second battery pack is supplied to the load through both the DC/DC converter and the second relay when a difference between the output voltage of the DC/DC converter and the second pack voltage becomes equal to or less than a second predetermined value during an execution of the third discharge stage.

The controller may be configured to execute a fifth discharge stage configured to control the DC/DC converter to be turned off so that power supply from the second battery pack to the load through the DC/DC converter is cut off when an execution time of the fourth discharge stage reaches a second configured time.

The controller is configured to execute a sixth discharge stage configured to switch the first relay from an off state to an on state so that a parallel circuit of the first battery pack and the second battery pack is connected to the load when the voltage difference between the second pack voltage and the first pack voltage becomes equal to or less than a third predetermined value during an execution of the fifth discharge stage.

The controller may be configured to enter a charge sequence control mode in response to a charge start command received from the vehicle controller, identify a charge sequence of the first battery pack and a charge sequence of the second battery pack, when it is time to charge the first battery pack, control the first relay to be turned on until the first pack voltage reaches a target voltage, and when it is time to charge the second battery pack, control the second relay to be turned on until the second pack voltage reaches a target voltage.

The controller may be configured to set the charge sequence of the first battery pack to precede the charge sequence of the second battery pack when the first pack voltage is equal to or less than the second pack voltage at the time of receiving the charge start command, and set the charge sequence of the second battery pack to precede the charge sequence of the first battery pack when the first pack voltage is greater than the second pack voltage at the time of receiving the charge start command.

A dual battery pack system according to another aspect of the present disclosure includes the charge and discharge control device described above.

An electric vehicle according to another aspect of the present disclosure includes the dual battery pack system described above.

A charge and discharge control method according to another aspect of the present disclosure may be executed by the charge and discharge control device. The charge and discharge control method may include entering the discharge sequence control mode in response to the discharge start command received from the vehicle controller, and controlling the first relay, the second relay, and the DC/DC converter on the basis of at least one of the first pack voltage and the second pack voltage while operating in the discharge sequence control mode.

The controlling of the first relay, the second relay, and the DC/DC converter may include at least one discharge process of controlling the DC/DC converter to be turned on during a voltage control requirement period in which a voltage difference between the first pack voltage and the second pack voltage is required to be reduced.

The controlling of the first relay, the second relay, and the DC/DC converter may further include determining whether the first pack voltage is equal to or greater than a first reference voltage and, when the first pack voltage is equal to or greater than the first reference voltage, executing a first discharge stage configured to control the first relay to be turned on so that output power of the first battery pack is supplied to the load through the first relay.

The controlling of the first relay, the second relay, and the DC/DC converter may further include, when a difference between the first pack voltage and a predetermined second reference voltage, which is less than the first reference voltage, becomes equal to or less than a first predetermined value during an execution of the first discharge stage, setting a target value of an output voltage of the DC/DC converter to be equal to the second reference voltage, and then executing a second discharge stage configured to control the DC/DC converter to be turned on so that output power of the second battery pack together with the output power of the first battery pack is supplied to the load through the DC/DC converter.

The controlling of the first relay, the second relay, and the DC/DC converter may further include executing a third discharge stage configured to control the first relay to be turned off so that power supply from the first battery pack to the load is cut off when an execution time of the second discharge stage reaches a first configured time.

The controlling of the first relay, the second relay, and the DC/DC converter may further include executing a fourth discharge stage configured to control the second relay to be turned on so that the output power of the second battery pack is supplied to the load through both the DC/DC converter and the second relay when a difference between the output voltage of the DC/DC converter and the second pack voltage becomes equal to or less than a second predetermined value during an execution of the third discharge stage.

The controlling of the first relay, the second relay, and the DC/DC converter may further include executing a fifth discharge stage configured to control the DC/DC converter to be turned off so that power supply from the second battery pack to the load through the DC/DC converter is cut off when an execution time of the fourth discharge stage reaches a second configured time.

### Advantageous Effects

According to at least one of the embodiments of the present disclosure, the DC/DC converter provided as a power transmission channel between the auxiliary battery pack, among two battery packs provided for power supply to a load, and a load may be utilized as a temporary voltage adjustment to suppress the voltage difference between the main battery pack and the auxiliary battery pack or the voltage difference between the auxiliary battery pack and the output of the DC/DC converter, so that the DC/DC converter does not need to be constantly operated while power is supplied from the auxiliary battery pack to the load, and power may be directly supplied from the auxiliary battery pack to the load through a relay without passing through the DC/DC converter.

Accordingly, since a high output is not required for the DC/DC converter, a small-volume DC/DC converter may be used. As a result, the overall pack capacity of the dual battery pack system may be increased. In addition, since a high-efficiency DC/DC converter is not required, a low-priced DC/DC converter may be used. As a result, the overall cost of the dual battery pack system may be reduced. In addition, since the power is directly output from the auxiliary battery pack through the relay without passing through the DC/DC converter, the overall capacity efficiency of the dual battery pack system may be increased.

In addition, according to at least one of the embodiments of the present disclosure, in configuring a dual battery pack system, if there is a difference in voltage between respective battery packs when charging the respective battery packs, the battery pack of a lower voltage may be charged first until the voltages of the two packs become almost the same, and then the two battery packs may be charged simultaneously. Accordingly, a high current does not flow from the battery pack of a higher voltage to the battery pack of the lower voltage, thereby securing safety. In addition, the charging time may be shortened when the two battery packs are charged simultaneously, compared to when the respective battery packs are charged at different times.

The effects obtainable from the present disclosure are not limited to the above-mentioned effects, and other effects not mentioned above will be clearly understood by those skilled in the art from the claims below.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a diagram illustrating the configuration of an electric vehicle according to the present disclosure.
FIG. 2 is a timing chart for reference in explaining an example of a discharge sequence of a dual battery pack system executed by a charge and discharge control device according to an embodiment of the present disclosure.
FIG. 3 is a graph illustrating temporal changes of a first pack voltage, a second pack voltage, and an output voltage of a DC/DC converter, respectively, during an execution period of the discharge sequence according to FIG. 2.
FIG. 4a and FIG. 4b are flowcharts illustrating a charge and discharge control method according to an embodiment of the present disclosure.
FIG. 5a and FIG. 5b are flowcharts illustrating a charge and discharge control method according to another embodiment of the present disclosure.
FIG. 6 is a flowchart illustrating a charge and discharge control method according to another embodiment of the present disclosure.
FIG. 7 is a flowchart illustrating a charge and discharge control method according to another embodiment of the present disclosure.
FIG. 8 is a drawing for reference in schematically explaining a dual battery pack system to which an active topology according to a prior art is applied.
FIG. 9 is a drawing for reference in schematically explaining a dual battery pack system to which a semi-active topology according to a prior art is applied.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

The terms including "first," "second," etc. are used to distinguish one element from another element, among various element, and are not used to limit the elements.

Throughout the specification, the expression "a part 'includes' an element" indicates that the part may further include other elements, instead of excluding the same, unless otherwise stated.

In addition, the term <controller> described in the specification indicates a unit that processes at least one function or operation, and may be implemented by hardware, software, or a combination of hardware and software.

Furthermore, throughout the specification, the expression "an element is 'connected' to another element" indicates that they are "indirectly connected" to each other with another element therebetween, as well as that they are "directly connected" to each other.

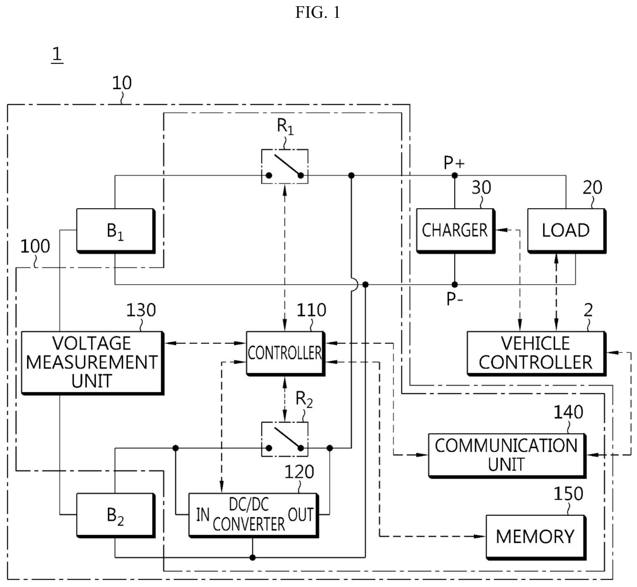

FIG. 1 is a diagram illustrating the configuration of an electric vehicle 1 according to the present disclosure.

Referring to FIG. 1, an electric vehicle 1 may include a vehicle controller 2, a dual battery pack system 10, a load 20, and a charger 30.

The vehicle controller 2 (e.g., ECU (Electronic Control Unit)) is configured to transmit a key-on signal (this may be referred to as a "discharge start command") to the dual battery pack system 10 in response to a start button (not shown), provided in the electric vehicle 1, being switched to an ON position by a user. The vehicle controller 2 is configured to transmit a key-off signal (this may be referred to as a "discharge stop command") to the dual battery pack system 10 in response to the start button being switched to an OFF position by the user. The vehicle controller 2 is configured to transmit a "charge start command" to the dual battery pack system 10.

Power terminals P+ and P- of the dual battery pack system 10 may be electrically coupled to the charger 30 via charging cables or the like. The charger 30 may communicate with the vehicle controller 2 and supply constant current or constant voltage charging power through the power terminals P+ and P- of the dual battery pack system 10. The charger 30 may be included in the electric vehicle 1 or provided in a charging station outside the electric vehicle 1.

The power terminals P+ and P- of the dual battery pack system 10 may be electrically coupled to the plus terminal and minus terminal of the load 20. The load 20 is a device that receives power from the dual battery pack system 10, thereby discharging the respective battery packs.

The dual battery pack system 10 includes a first battery pack B₁, a second battery pack B₂, and a charge and discharge control device 100.

Each of the first battery pack B₁ and the second battery pack B₂ may include a plurality of battery cells connected in series. The battery cells included in the first battery pack B₁ and the battery cells included in the second battery pack B₂ may be of different types.

The first battery pack B₁ may indicate a main battery pack, and the second battery pack B₂ may indicate an auxiliary battery pack.

Meanwhile, the first battery pack B₁, which is the main battery pack, may be configured to include a battery cell having a relatively small capacity but a long lifespan. The second battery pack B₂, which is the auxiliary battery pack, may be configured to include a battery cell having a relatively short lifespan but a large capacity.

Examples of the battery cell included in the first battery pack B₁ include at least one type of battery cell including NCM, LFP, or the like as a positive electrode material. Examples of the battery cell included in the second battery pack B₂ include an anode-free battery cell, a Li-Si battery cell, or the like.

The charge and discharge control device 100 includes a controller 110, a first relay R₁, a second relay R₂, a DC/DC converter 120, a voltage measurement unit 130, a communication unit 140, and a memory 150.

The first relay R₁ is connected between the first battery pack B₁ and the load 20. Specifically, the first battery pack B₁ and the load 20 are connected through a pair of power lines, and the first relay R₁ may be installed on at least one of the pair of power lines.

The second relay R₂ is connected between the second battery pack B₂ and the load 20. Specifically, the second battery pack B₂ and the load 20 are connected through a pair of power lines, and the second relay R₂ may be installed on at least one of the pair of power lines.

The DC/DC converter 120 is connected between the second battery pack B₂ and the load 20. Specifically, the input end IN of the DC/DC converter 120 and the second battery pack B₂ may be connected through a pair of power lines, and the output end OUT of the DC/DC converter 120 and the load 20 may be connected through another pair of power lines. The DC/DC converter 120 functions as a power transmission channel from the second battery pack B₂ to the load 20, independently of the operating state of the second relay R₂.

The voltage measurement unit 130 is operably coupled to the controller 110. That is, the voltage measurement unit 130 may be connected to the controller 110 so as to transmit an electrical signal to the controller 110 or receive an electrical signal from the controller 110.

The voltage measurement unit 130 measures a first pack voltage, which is the voltage between both ends of the first battery pack B₁, and a second pack voltage, which is the voltage between both ends of the second battery pack B₂. Specifically, the voltage measurement unit 130 detects the voltage between both ends of each battery pack using the potential difference between a pair of sensing lines respectively connected to the positive electrode and the negative electrode of the battery pack.

The communication unit 140 receives a discharge start command, a discharge stop command, a charge start command, and/or a charge stop command from the vehicle controller 2.

The communication unit 140 is configured to support wired or wireless communication between the controller 110 and the vehicle controller 2. The wired communication may be, for example, CAN (controller area network) communication, and the wireless communication may be, for example, Zigbee or Bluetooth communication. In addition, any type of communication protocol may be applied as long as it supports wired or wireless communication between the controller 110 and the vehicle controller 2. The communication unit 140 may include an output device (e.g., a display or a speaker) that provides information received from the controller 110 and/or the vehicle controller 2 in a form capable of being recognized by a use.

The memory 150 may include at least one type of storage medium among, for example, a flash memory type, a hard disk type, an SSD (Solid State Disk) type, an SDD (Silicon Disk Drive) type, a multimedia card micro type, a RAM (random access memory), an SRAM (static random access memory), a ROM (read-only memory), an EEPROM (electrically erasable programmable read-only memory), and a PROM (programmable read-only memory). The memory 150 may store data and a program required for an operation by the controller 110. The memory 150 may store data indicating a result of an operation by the controller 110. Although FIG. 1 shows that the memory 150 is provided to be physically independent of the controller 110, it may be provided inside the controller 110.

The controller 110 may be operably coupled to at least one of the first relay R₁, the second relay R₂, the DC/DC converter 120, the voltage measurement unit 130, the communication unit 140, and the memory 150. The fact that the two elements are operably coupled indicates that the two elements are directly or indirectly connected so as to transmit and receive signals in one direction or both directions.

The controller 110 may collect a voltage signal from the voltage measurement unit 130. The controller 110 may convert each analog signal collected from the voltage measurement unit 130 into a digital value using an ADC (Analog-to-Digital Converter) provided therein, and record the same.

The controller 110 may be called a "control circuit" or a "battery controller", and may be implemented in hardware using at least one of ASICs (application specific integrated circuits), DSPs (digital signal processors), DSPDs (digital signal processing devices), PLDs (programmable logic devices), FPGAs (field programmable gate arrays), microprocessors, and other electrical units for performing functions.

The controller 110 may enter a discharge sequence control mode in response to a discharge start command received from the vehicle controller.

The controller 110 may be configured to control, while operating in the discharge sequence control mode, the DC/DC converter 120 to be turned on during a voltage control requirement period during which the voltage difference between the first pack voltage and the second pack voltage is required to be reduced.

The controller 110 may control the first relay R₁, the second relay R₂, and the DC/DC converter 120 on the basis of at least one of the first pack voltage and the second pack voltage.

Specifically, the controller 110 may compare the first pack voltage or the second pack voltage with a first reference voltage V_{R1}, a second reference voltage V_{R2}, or an output voltage of the DC/DC converter 120 in response to a discharge start command received from the vehicle controller 2. According to the comparison result, the controller 110 may control the output voltage and the operating state of the DC/DC converter 120, and the electrical connection between the first battery pack B₁ and the load 20 and between the second battery pack B₂ and the load 20 by controlling the states of the first relay R₁ and the second relay R₂.

The controller 110 may identify the charge sequence of the first battery pack B₁ and the second battery pack B₂ in response to a charge start command received from the vehicle controller 2. According to the identified charge sequence, the controller 110 may control the states of the first relay R₁ and the second relay R₂, thereby controlling the electrical connection between the first battery pack B₁ and the charger 30 and between the second battery pack B₂ and the charger 30.

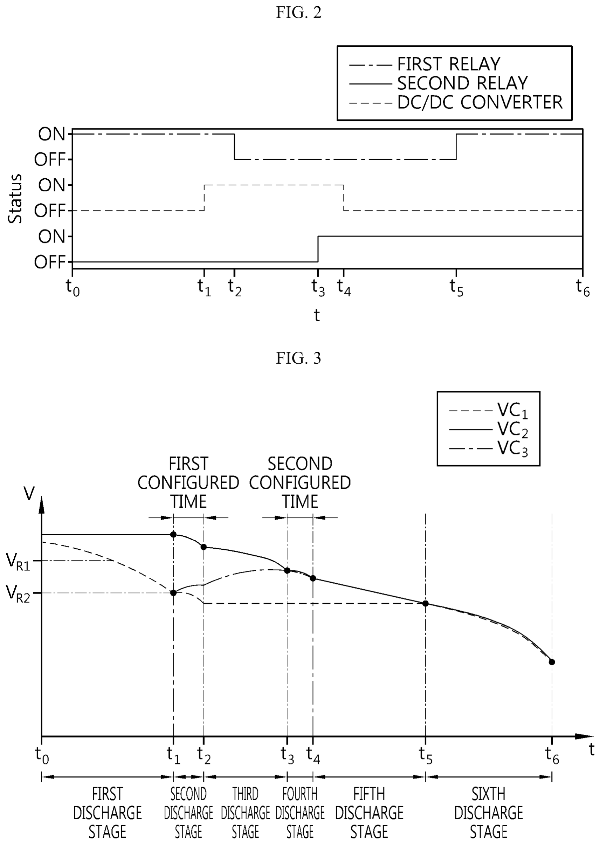

FIG. 2 is a timing chart for reference in explaining an example of a discharge sequence of a dual battery pack system executed by a charge and discharge control device according to an embodiment of the present disclosure, and FIG. 3 is a graph illustrating temporal changes of a first pack voltage, a second pack voltage, and an output voltage of a DC/DC converter, respectively, during an execution period of the discharge sequence according to FIG. 2.

In FIGS. 2 and 3, t₀ is a time at which a discharge start command transmitted from the vehicle controller 2 is received by the communication unit 140. In FIG. 3, a voltage curve VC₁ exemplifies a temporal change in the first pack voltage, a voltage curve VC₂ exemplifies a temporal change in the second pack voltage, and a voltage curve VC₃ exemplifies a temporal change in the output voltage of the DC/DC converter 120.

The controller 110 determines whether the first pack voltage is equal to or greater than a first reference voltage V_{R1} in response to a discharge start command received from the vehicle controller 2 at time t₀. If the first pack voltage is equal to or greater than the first reference voltage V_{R1}, the controller 110 executes a first discharge stage for controlling the first relay R₁ to be turned on so that power is supplied from the first battery pack B₁ to the load 20 through the first relay R1.

Referring to FIG. 2, while the first discharge stage (section t₀ to t₁) is executed, the first relay R₁ may be controlled to be turned on, and the second relay R₂ and the DC/DC converter 120 may be controlled to be turned off. As a result, it can be seen in FIG. 3 that the first pack voltage decreases and the second pack voltage and the output voltage of the DC/DC converter 120 remain constant while the first discharge stage (section t₀ to t₁) is executed.

t₁ is a time at which the difference between the first pack voltage and a second reference voltage V_{R2} becomes equal to or less than a first predetermined value during the execution of the first discharge stage. Here, the second reference voltage V_{R2} is less than the first reference voltage V_{R1}. The second reference voltage V_{R2} may be a predetermined voltage or may be determined based on the first pack voltage or the second pack voltage at time t₀.

At time t₁, the controller 110 sets the target value of the output voltage of the DC/DC converter 120 to be equal to the second reference voltage V_{R2}, and then executes a second discharge stage for controlling the DC/DC converter 120 to be turned on so that power is supplied from the second battery pack B₂ to the load 20 through the DC/DC converter 120.

Referring to FIG. 2, it can be seen that, while the second discharge stage (section t₁ to t₂) is executed, the first relay R₁ and the DC/DC converter 120, among the first relay R1, the second relay R₂, and the DC/DC converter 120, are controlled to be turned on and the second relay R₂ is controlled to be turned off. As a result, it can be confirmed in FIG. 3 that, while the second discharge stage (section t₁ to t₂) is executed, the first pack voltage and the second pack voltage decrease and the output voltage of the DC/DC converter 120 increases.

t₂ is a time at which the execution time of the second discharge stage reaches a first configured time. At time t₂, the controller 110 executes a third discharge stage for controlling the first relay R₁ to be turned off so that the power supply from the first battery pack B₁ to the load 20 is cut off. Meanwhile, the first configured time may be predetermined in consideration of the durability of the load 20 or the like.

Referring to FIG. 2, it can be confirmed that, while the third discharge stage (section t₂ to t₃) is executed, only the DC/DC converter 120, among the first relay R₁, the second relay R₂, and the DC/DC converter 120, is controlled to be turned on, and the first relay R₁ and the second relay R₂ are controlled to be turned off.

The controller 110 may set a target value of the output voltage of the DC/DC converter 120 at predetermined time intervals from time t₂ so that the output voltage of the DC/DC converter 120 follows the second pack voltage. Accordingly, it can be confirmed in FIG. 3 that the voltage difference between the output voltage of the DC/DC converter 120 and the second pack voltage gradually decreases from time t₂.

t3 is a time at which the difference between the output voltage of the DC/DC converter 120 and the second pack voltage becomes equal to or less than a second predetermined value during the execution of the third discharge stage. At time t₃, the controller 110 executes a fourth discharge stage for controlling the second relay R₂ to be turned on so that the output power of the second battery pack B₂ is supplied to the load 20 through both the DC/DC converter 120 and the second relay R₂.

Referring to FIG. 2, it can be confirmed that, while the fourth discharge stage (section t₃ to t₄) is executed, the second relay R₂ and the DC/DC converter 120, among the first relay R₁, the second relay R₂, and the DC/DC converter 120, are controlled to be turned on, and the first relay R₁ is controlled to be turned off. As a result, it can be confirmed in FIG. 3 that the second pack voltage and the output voltage of the DC/DC converter 120 gradually decrease and the first pack voltage remains constant while the fourth discharge stage (section t₃ to t₄) is executed.

Each of the second discharge stage (section t₁ to t₂) and the third discharge stage (section t₂ to t₃) corresponds to a voltage control requirement period according to the present disclosure.

t₄ is a time at which the execution time of the fourth discharge stage reaches a second configured time. At time t₄, the controller 110 executes a fifth discharge stage for controlling the DC/DC converter 120 to be turned off so that the power supply from the second battery pack B₂ to the load through the DC/DC converter 120 is cut off. Meanwhile, the second configured time may be predetermined in consideration of the durability of the load 20 or the like.

Referring to FIG. 2, it can be confirmed that, while the fifth discharge stage (section t₄ to t₅) is executed, only the second relay R₂, among the first relay R₁, the second relay R₂, and the DC/DC converter 120, is controlled to be turned on, and the first relay R₁ and the DC/DC converter 120 are controlled to be turned off. As a result, it can be confirmed in FIG. 3 that the second pack voltage gradually decreases and the first pack voltage remains constant while the fifth discharge stage (section t₄ to t₅) is executed.

t₅ is the time at which the voltage difference between the second pack voltage and the first pack voltage becomes equal to or less than a third predetermined value while the fifth discharge stage is executed. t₆ is a time at which the controller 110 receives a discharge stop command (key-off signal) from the vehicle controller 2 through the communication unit 140. At time t₅, the controller 110 may execute a sixth discharge stage for switching the first relay R₁ from the turn-off state to the turn-on state so that the parallel circuit of the first battery pack B₁ and the second battery pack B₂ is connected to the load 20.

Referring to FIG. 2, it can be confirmed that, after time t₅, the first relay R₁ and the second relay R₂ are controlled to be turned on and the DC/DC converter 120 is controlled to be turned off. Referring to FIG. 3, it can be confirmed in FIG. 3 that the first pack voltage and the second pack voltage are reduced as a result.

In the entire discharge section t₀ to t₆, the section in which the DC/DC converter 120 is turned on is the section t₁ to t₄, compared to the section t₃ to t₆ in which the second battery pack B₂ is discharged. That is, among the sections in which the second relay R₂ is turned on, the section in which the DC/DC converter 120 is also turned on is only the section t₃ to t₄.

The DC/DC converter (see FIGS. 8 and 9) must be kept turned on while the discharge power is supplied from the auxiliary battery pack to the load in the prior art, whereas the charge and discharge control device 100 according to the present disclosure may utilize the DC/DC converter 120, provided as a power transmission channel between the second battery pack B₂ and the load 20, for temporary voltage adjustment to suppress the voltage difference between the first battery pack B₁ and the second battery pack B₂ or the voltage difference between the second battery pack B₂ and the output OUT of the DC/DC converter 120.

Therefore, the charge and discharge control device 100 according to an embodiment of the present disclosure does not have to constantly operate the DC/DC converter 120 while the power is supplied from the second battery pack B₂ to the load 20, and the power may be directly supplied from the second battery pack B₂ to the load 20 through the second relay R₂ without passing through the DC/DC converter 120. That is, since a high-output specification is not required for the DC/DC converter 120, a small-volume DC/DC converter 120 may be used, and since a high-efficiency DC/DC converter 120 is not required, a low-priced DC/DC converter 120 may be used. As a result, the overall pack capacity of the dual battery pack system 10 may be increased, and the cost may be reduced. In addition, since the power of the second battery pack B₂ is directly output through the second relay R₂ without passing through the DC/DC converter 120, the overall capacity efficiency of the dual battery pack system 10 may be increased.

The controller 110 may enter a charge sequence control mode in response to a charge start command received from the vehicle controller 2 and identify the charge sequence of the first battery pack B₁ and the second battery pack B₂. The controller 110 may be configured to control the first relay R₁ to be turned on until the first pack voltage reaches a target voltage when it is time to charge the first battery pack B₁ and control the second relay R₂ to be turned on until the second pack voltage reaches a target voltage when it is time to charge the second battery pack B₂.

That is, two battery packs are selectively charged until each reaches the target voltage, thereby avoiding a situation in which two battery packs are charged simultaneously.

The controller 110 may set the charge sequence of the first battery pack B₁ to precede the charge sequence of the second battery pack B₂ if the first pack voltage is equal to or lower than the second pack voltage, and set the charge sequence of the second battery pack B₂ to precede the charge sequence of the first battery pack B₁ if the first pack voltage is greater than the second pack voltage.

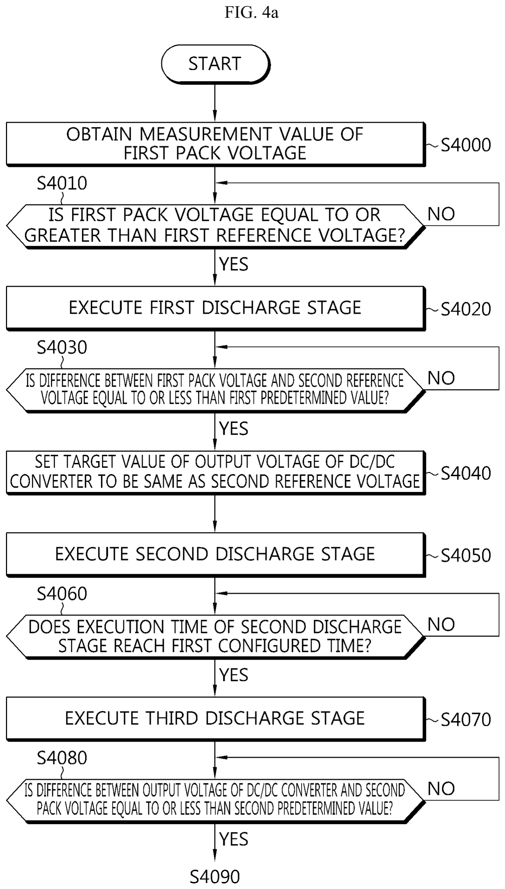

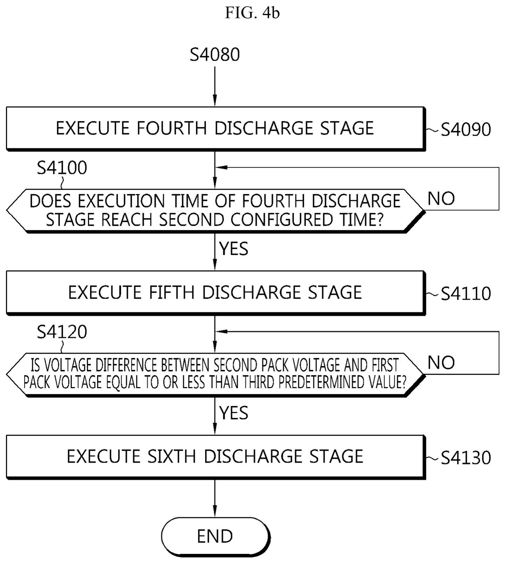

FIG. 4a and FIG. 4b are flowcharts illustrating a charge and discharge control method according to an embodiment of the present disclosure. The controller 110 may enter a discharge sequence control mode in response to receiving a discharge start command from the vehicle controller 2 through the communication unit 140. The method in FIGS. 4a and 4b may be performed while the controller 110 is operating in the discharge sequence control mode.

Referring to FIGS. 1 to 4b, the controller 110 obtains a measurement value of a first pack voltage in step S4000. The measurement value of the first pack voltage obtained in step S4000 may represent the first pack voltage at time t₀ in FIG. 3.

In step S4010, the controller 110 may determine whether the first pack voltage is equal to or greater than a first reference voltage V_{R1}. The first reference voltage V_{R1} is a minimum voltage at which the first battery pack B₁ alone, among the first battery pack B₁ and the second battery pack B₂, is allowed to drive the load 20, which may be predetermined. If the determination corresponds to "Yes" in step S4010, the process may proceed to step S4020. If the determination corresponds to "No" in step S4010, the method according to FIG. 4a and FIG. 4b may be terminated or step S4010 may be re-executed.

In step S4020, the controller 110 may execute a first discharge stage. Specifically, the first discharge stage is configured to control the first relay R₁ to be turned on so that the output power of the first battery pack B₁ is supplied to the load 20 through the first relay R1. That is, in the first discharge stage, only the first battery pack B₁ among the first battery pack B₁ and the second battery pack B₂ supplies power to the load 20.

In step S4030, the controller 110 may determine whether the difference between the first pack voltage and a second reference voltage V_{R2}, which is less than the first reference voltage V_{R1}, is equal to or less than a first predetermined value. The second reference voltage V_{R2} requires parallel operation of the first battery pack B₁ and the second battery pack B₂ for driving the load 20, which may be predetermined. At time t₁ in FIG. 3, the determination may be "Yes" in step S4030. If the determination in step S4030 is "Yes", the process may proceed to step S4040. If the determination in step S4030 is "No", the process may be re-executed.

In step S4040, the controller 110 may set the target value of the output voltage of the DC/DC converter 120 to be the same as the second reference voltage V_{R2}.

In step S4050, the controller 110 may execute a second discharge stage. Specifically, the second discharge stage is configured to control the DC/DC converter 120 to be turned on so that the output power of the second battery pack B₂ together with the output power of the first battery pack B₁ is supplied to the load 20 through the DC/DC converter 120.

In step S4060, the controller 110 may determine whether or not the execution time of the second discharge stage reaches a first configured time. At time t₂ in FIG. 3, the determination in step S4060 may be "Yes". If the determination in step S4060 is "Yes", the process may proceed to step S4070. If the determination in step S4060 is "No", step S4060 may be re-executed.

In step S4070, the controller 110 may execute a third discharge stage. Specifically, the third discharge stage is configured to control the first relay R₁ to be turned off so that the power supply from the first battery pack B₁ to the load 20 is cut off.

In step S4080, the controller 110 may determine whether the difference between the output voltage of the DC/DC converter 120 and the second pack voltage is equal to or less than a second predetermined value. At time t₃ in FIG. 3, the determination in step S4080 may be "Yes". If the determination in step S4080 is "Yes", the process may proceed to step S4090. If the determination in step S4080 is "No", step S4080 may be re-executed.

In step S4090, the controller 110 may execute a fourth discharge stage. Specifically, the fourth discharge stage is configured to control the second relay R₂ to be turned on so that the output power of the second battery pack B₂ is supplied to the load 20 through both the DC/DC converter 120 and the second relay R₂.

In step S4100, the controller 110 may determine whether the execution time of the fourth discharge stage reaches a second configured time. At time t₄ in FIG. 3, the determination in step S4100 may be "Yes". If the determination in step S4100 is "Yes", the process may proceed to step S4110. If the determination in step S4100 is "No", step S4100 may be re-executed.

In step S4110, the controller 110 may execute a fifth discharge stage. Specifically, the fifth discharge stage is configured to control the DC/DC converter 120 to be turned off so that the power supply from the second battery pack B₂ to the load 20 through the DC/DC converter 120 is cut off.

In step S4120, the controller 110 may determine whether the voltage difference between the second pack voltage and the first pack voltage is equal to or less than a third predetermined value. At time t₅ in FIG. 3, the determination in step S4120 may be "Yes". If the determination in step S4120 is "Yes", the process may proceed to step S4130. If the determination in step S4120 is "No", step S4120 may be re-executed.

In step S4130, the controller 110 may execute a sixth discharge stage. Specifically, the sixth discharge stage is configured to control the first relay R₁ and the second relay R₂ to be turned on so that the parallel circuit of the first battery pack B₁ and the second battery pack B₂ is connected to the load 20.

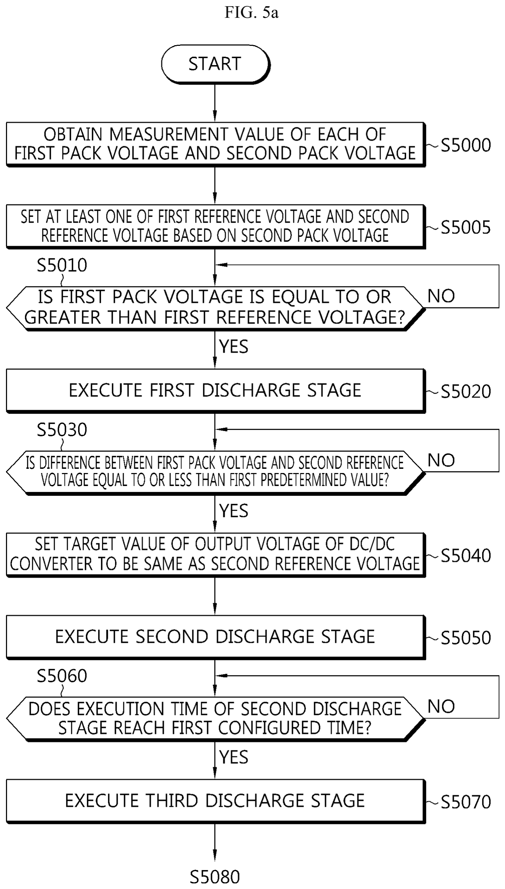

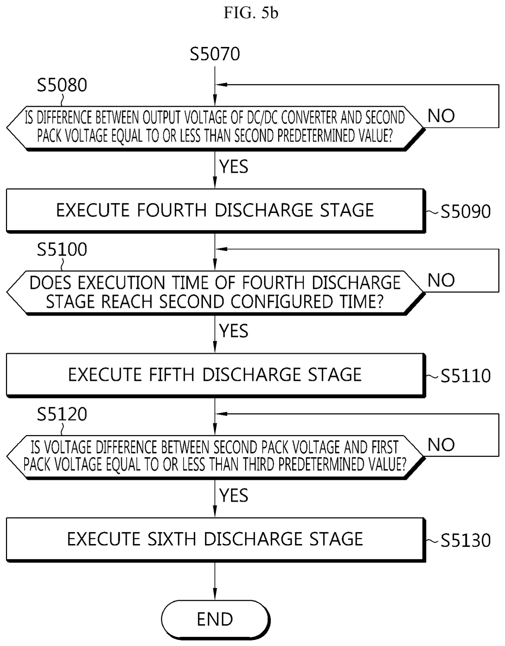

FIG. 5a and FIG. 5b are flowcharts illustrating a charge and discharge control method according to another embodiment of the present disclosure. In the method in FIGS. 5a and 5b, the controller 110 may enter a discharge sequence control mode in response to receiving a discharge start command from the vehicle controller 2 through the communication unit 140. The method in FIGS. 5a and 5b may be executed while the controller 110 is operating in the discharge sequence control mode.

Referring to FIGS. 1 to 3 and FIGS. 5a and 5b, the controller 110 obtains measurement values of a first pack voltage and a second pack voltage, respectively, from the voltage measurement unit 130 in step S5000. The measurement values of the first pack voltage and the second pack voltage obtained in step S5000 may represent the first pack voltage and the second pack voltage at time t₀ in FIG. 3.

In step S5005, the controller 110 may set at least one of the first reference voltage V_{R1} and the second reference voltage V_{R2} on the basis of the second pack voltage obtained in step S5000.

For example, the first reference voltage V_{R1} may be set to be equal to a first ratio (e.g., 90%) of the second pack voltage at time t₀, and the second reference voltage V_{R2} may be set to be equal to a second ratio (e.g., 50%) of the second pack voltage at time t₀. The first ratio may be greater than the second ratio. Each of the first ratio and the second ratio may be predetermined in consideration of the rated output and efficiency of the DC/DC converter 120. In addition, only one of the first reference voltage V_{R1} and the second reference voltage V_{R2} may be set based on the second pack voltage, and in this case, the other one of the first reference voltage V_{R1} and the second reference voltage V_{R2} may be predetermined.

In step S5010, the controller 110 may determine whether the first pack voltage is equal to or greater than the first reference voltage V_{R1}. If the determination in step S5010 is "Yes", the process may proceed to step S5020. If the determination in step S5010 is "No", the method according to FIGS. 5a and 5b may be terminated or step S5010 may be re-executed.

In step S5020, the controller 110 may execute a first discharge stage. Specifically, the first discharge stage is configured to control the first relay R₁ to be turned on so that the output power of the first battery pack B₁ is supplied to the load 20 through the first relay R1.

In step S5030, the controller 110 may determine whether the difference between the first pack voltage and the second reference voltage V_{R2}, which is less than the first reference voltage V_{R1}, is equal to or less than a first predetermined value. At time t₁ in FIG. 3, the determination in step S5030 may be "Yes". If the determination in step S5030 is "Yes", the process may proceed to step S5040. If the determination in step S5030 is "No", step S5030 may be re-executed.

In step S5040, the controller 110 may set the target value of the output voltage of the DC/DC converter 120 to be equal to the second reference voltage V_{R2}.

In step S5050, the controller 110 may execute a second discharge stage. Specifically, the second discharge stage is configured to control the DC/DC converter 120 to be turned on so that the output power of the second battery pack B₂ together with the output power of the first battery pack B₁ is supplied to the load 20 through the DC/DC converter 120.

In step S5060, the controller 110 may determine whether or not the execution time of the second discharge stage reaches a first configured time. At time t₂ in FIG. 3, the determination in step S5060 may be "Yes". If the determination in step S5060 is "Yes", the process may proceed to step S5070. If the determination in step S5060 is "No", step S5060 may be re-executed.

In step S5070, the controller 110 may execute a third discharge stage. Specifically, the third discharge stage is configured to control the first relay R₁ to be turned off so that the power supply from the first battery pack B₁ to the load 20 is cut off.

In step S5080, the controller 110 may determine whether the difference between the output voltage of the DC/DC converter 120 and the second pack voltage is equal to or less than a second predetermined value. At time t₃ in FIG. 3, the determination in step S5080 may be "Yes". If the determination in step S5080 is "Yes", the process may proceed to step S5090. If the determination in step S5080 is "No", step S5080 may be re-executed.

In step S5090, the controller 110 may execute a fourth discharge stage. Specifically, the fourth discharge stage is configured to control the second relay R₂ to be turned on so that the output power of the second battery pack B₂ is supplied to the load 20 through both the DC/DC converter 120 and the second relay R₂.

In step S5100, the controller 110 may determine whether the execution time of the fourth discharge stage reaches a second configured time. At time t₄ in FIG. 3, the determination in step S5100 may be "Yes". If the determination in step S5100 is "Yes", the process may proceed to step S5110. If the determination in step S5100 is "No", the process may be re-executed.

In step S5110, the controller 110 may execute a fifth discharge stage. Specifically, the fifth discharge stage is configured to control the DC/DC converter 120 to be turned off so that the power supply from the second battery pack B₂ to the load 20 through the DC/DC converter 120 is cut off.

In step S5120, the controller 110 may determine whether the voltage difference between the second pack voltage and the first pack voltage is equal to or less than a third predetermined value. At time t₅ in FIG. 3, the determination in step S5120 may be "Yes". If the determination in step S5120 is "Yes", the process may proceed to step S5130. If the determination in step S5120 is "No", step S5120 may be re-executed.

In step S5130, the controller 110 may execute a sixth discharge stage. Specifically, the sixth discharge stage is configured to switch the first relay R₁ from a turn-off state to a turn-on state so that the parallel circuit of the first battery pack B₁ and the second battery pack B₂ is connected to the load 20. That is, in the sixth discharge stage, both the first relay R₁ and the second relay R₂ remain in the turn-off state.

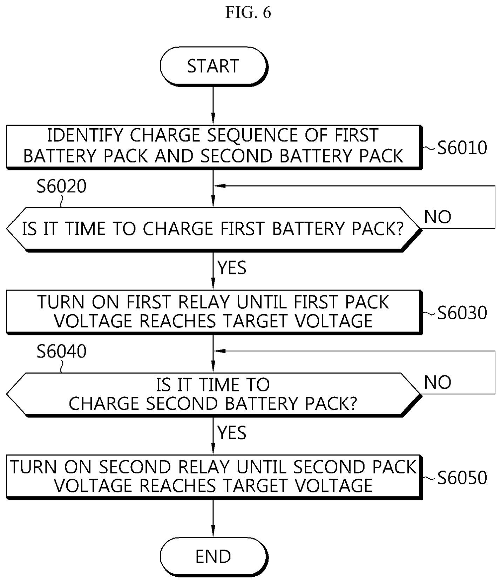

FIG. 6 is a flowchart illustrating a charge and discharge control method according to another embodiment of the present disclosure.

The controller 110 may enter a charge sequence control mode in response to receiving a charge start command from the vehicle controller 2 through the communication unit 140. The method in FIG. 6 may be executed while the controller 110 is operating in the charge sequence control mode.

Referring to FIG. 6, the controller 110 may identify the charge sequence of the first battery pack B₁ and the second battery pack B₂ in step S6010.

In step S6020, the controller 110 may determine whether or not it is time to charge the first battery pack B₁. If the determination in step S6020 is "Yes", the process may proceed to step S6030. If the determination in step S6020 is "No", step S6020 may be re-executed.

In step S6030, the controller 110 may control the first relay R₁ to be turned on until the first pack voltage reaches a target voltage.

In step S6040, the controller 110 may determine whether or not it is time to charge the second battery pack B₂. If the determination in step S6040 is "Yes", the process may proceed to step S6050. If the determination in step S6040 is "No", step S6040 may be re-executed.

In step S6050, the controller 110 may control the second relay R₂ to be turned on until the first pack voltage reaches a target voltage.

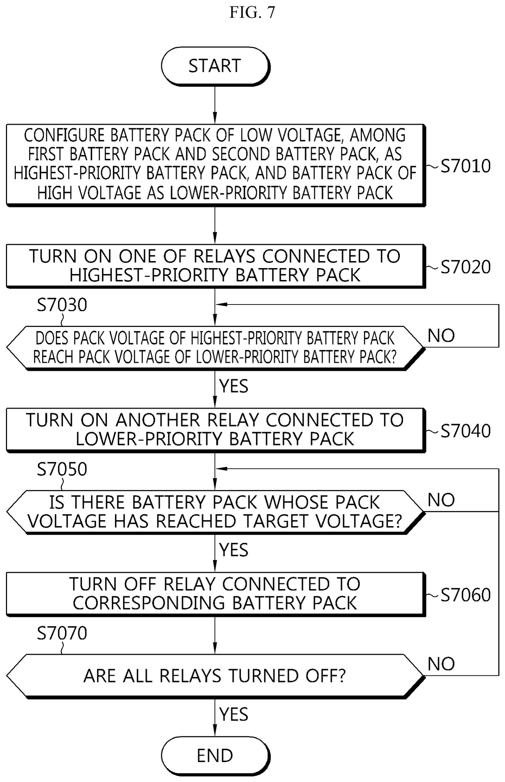

FIG. 7 is a flowchart illustrating a charge and discharge control method according to another embodiment of the present disclosure. The controller 110 may enter a charge sequence control mode in response to receiving a charge start command from the vehicle controller 2 through the communication unit 140. The method in FIG. 7 may be executed while the controller 110 is operating in the charge sequence control mode.

Referring to FIG. 7, in step S7010, the controller 110 may configure the battery pack of a lower voltage, among the first battery pack B₁ and the second battery pack B₂, as a highest-priority battery pack and configure the battery pack of a higher voltage as a lower-priority battery pack.

In step S7020, the controller 110 may control one of the relays connected to the highest-priority battery pack to be turned on. That is, the charger 30 may be controlled to be electrically connected to the highest-priority battery pack.

In step S7030, the controller 110 may determine whether or not the voltage of the highest-priority battery pack reaches the voltage of the lower-priority battery pack. If the determination in step S7030 is "Yes", the process may proceed to step S7040. If the determination in step S7030 is "No", step S7030 may be re-executed.

In step S7040, the controller 110 may control another relay connected to the lower-priority battery pack to be turned on. That is, the charger 30 may be controlled to be electrically connected to the lower-priority battery pack.

In step S7050, the controller 110 may determine whether or not there is a battery pack whose pack voltage has reached a target voltage. If the determination in step S7050 is "Yes", the process may proceed to step S7060. If the determination in step S7050 is "No", step S7050 may be re-executed.

In step S7060, the controller 110 may control the relay, connected to the corresponding battery pack, to be turned off. That is, the electrical connection between the battery pack and the charger 30 whose pack voltage has reached the target voltage may be released.

In step S7070, the controller 110 may determine whether or not all relays are turned off. If the determination in step S7070 is "Yes", the method according to FIG. 7 may be terminated. If the determination in step S7070 is "No", step S7050 may be re-executed.

FIG. 8 is a drawing for reference in schematically explaining a dual battery pack system to which an active topology according to a prior art is applied.

Referring to FIG. 8, the active topology is a method in which two DC/DC converters are connected to the main battery pack and the auxiliary battery pack, respectively, so that two battery packs may be used more actively.

FIG. 9 is a drawing for reference in schematically explaining a dual battery pack system to which a semi-active topology according to a prior art is applied.

Referring to FIG. 9, the semi-active topology is a method in which the DC/DC converter is connected only to the power transmission path between the auxiliary battery pack and the load so that the DC/DC converter is constantly operated while the power of the auxiliary battery pack is supplied to the load

The embodiments of the present disclosure described above may be implemented through a program that realizes functions corresponding to the configuration of the embodiments of the present disclosure or a recording medium in which the program is recorded, as well as through the device and method of the present disclosure, and such implementation may be easily performed by those skilled in the art to which the present disclosure pertains on the basis of the above description of the embodiments.

Although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

In addition, the present disclosure described above may have various substitutions, variations, and changes without departing from in the scope of the present disclosure by those skilled in the art to which the present disclosure belongs, so the present disclosure is not limited to the embodiments described above and the attached drawings, and all or some of the embodiments may be selectively combined and configured so that various modifications may be derived.

## Claims

1. A charge and discharge control device for a dual battery pack system comprising a first battery pack and a second battery pack, the charge and discharge control device comprising:
a first relay connected between the first battery pack and a load;
a second relay connected between the second battery pack and the load;
a DC/DC converter connected between the second battery pack and the load;
a voltage measurement unit configured to measure a first pack voltage, which is a voltage between both ends of the first battery pack, and a second pack voltage, which is a voltage between both ends of the second battery pack; and
a controller configured to control the first relay, the second relay, and the DC/DC converter on the basis of at least one of the first pack voltage and the second pack voltage,
wherein the controller is configured to:
enter a discharge sequence control mode in response to a discharge start command received from a vehicle controller, and
control the DC/DC converter to be turned on during a voltage control requirement period in which a voltage difference between the first pack voltage and the second pack voltage is required to be reduced while operating in the discharge sequence control mode.

2. The charge and discharge control device according to claim 1,
wherein the controller is configured to, while operating in the discharge sequence control mode,
determine whether the first pack voltage is equal to or greater than a first reference voltage,
when the first pack voltage is equal to or greater than the first reference voltage, execute a first discharge stage configured to control the first relay to be turned on so that output power of the first battery pack is supplied to the load through the first relay, and
when a difference between the first pack voltage and a predetermined second reference voltage, which is less than the first reference voltage, becomes equal to or less than a first predetermined value during execution of the first discharge stage, set a target value of an output voltage of the DC/DC converter to be equal to the second reference voltage, and then execute a second discharge stage configured to control the DC/DC converter to be turned on so that output power of the second battery pack is supplied to the load through the DC/DC converter.

3. The charge and discharge control device according to claim 2,
wherein the controller is configured to:
execute a third discharge stage configured to control the first relay to be turned off so that power supply from the first battery pack to the load is cut off when an execution time of the second discharge stage reaches a first configured time.

4. The charge and discharge control device according to claim 3,
wherein the controller is configured to:
execute a fourth discharge stage configured to control the second relay to be turned on so that the output power of the second battery pack is supplied to the load through both the DC/DC converter and the second relay when a difference between the output voltage of the DC/DC converter and the second pack voltage becomes equal to or less than a second predetermined value during an execution of the third discharge stage.

5. The charge and discharge control device according to claim 4,
wherein the controller is configured to:
execute a fifth discharge stage configured to control the DC/DC converter to be turned off so that power supply from the second battery pack to the load through the DC/DC converter is cut off when an execution time of the fourth discharge stage reaches a second configured time.

6. The charge and discharge control device according to claim 5,
wherein the controller is configured to
execute a sixth discharge stage configured to switch the first relay from an off state to an on state so that a parallel circuit of the first battery pack and the second battery pack is connected to the load when a voltage difference between the second pack voltage and the first pack voltage becomes equal to or less than a third predetermined value during an execution of the fifth discharge stage.

7. The charge and discharge control device according to claim 1,
wherein the controller is configured to:
enter a charge sequence control mode in response to a charge start command received from the vehicle controller, identify a charge sequence of the first battery pack and a charge sequence of the second battery pack,
when it is time to charge the first battery pack, control the first relay to be turned on until the first pack voltage reaches a target voltage, and
when it is time to charge the second battery pack, control the second relay to be turned on until the second pack voltage reaches a target voltage.

8. The charge and discharge control device according to claim 7,
wherein the controller is configured to
set the charge sequence of the first battery pack to precede the charge sequence of the second battery pack if the first pack voltage is equal to or less than the second pack voltage at a time of receiving the charge start command, and
set the charge sequence of the second battery pack to precede the charge sequence of the first battery pack when the first pack voltage is greater than the second pack voltage at the time of receiving the charge start command.

9. A dual battery pack system comprising the charge and discharge control device according to any one of claims 1 to 8.

10. An electric vehicle comprising the dual battery pack system according to claim 9.

11. A charge and discharge control method executable by the charge and discharge control device according to any one of claims 1 to 8, the charge and discharge control method comprising:
entering the discharge sequence control mode in response to the discharge start command received from the vehicle controller; and
controlling the first relay, the second relay, and the DC/DC converter on the basis of at least one of the first pack voltage and the second pack voltage while operating in the discharge sequence control mode,
wherein, the controlling of the first relay, the second relay, and the DC/DC converter comprises:
at least one discharge process of controlling the DC/DC converter to be turned on during a voltage control requirement period in which a voltage difference between the first pack voltage and the second pack voltage is required to be reduced.

12. The charge and discharge control method according to claim 11,
wherein the controlling of the first relay, the second relay, and the DC/DC converter comprises:
determining whether the first pack voltage is equal to or greater than a first reference voltage;
when the first pack voltage is equal to or greater than the first reference voltage, executing a first discharge stage configured to control the first relay to be turned on so that output power of the first battery pack is supplied to the load through the first relay; and
when a difference between the first pack voltage and a predetermined second reference voltage, which is less than the first reference voltage, becomes equal to or less than a first predetermined value during an execution of the first discharge stage, setting a target value of an output voltage of the DC/DC converter to be equal to the second reference voltage, and then executing a second discharge stage configured to control the DC/DC converter to be turned on so that output power of the second battery pack together with the output power of the first battery pack is supplied to the load through the DC/DC converter.

13. The charge and discharge control method according to claim 12,
wherein the controlling of the first relay, the second relay, and the DC/DC converter further comprises:
executing a third discharge stage configured to control the first relay to be turned off so that power supply from the first battery pack to the load is cut off when an execution time of the second discharge stage reaches a first configured time.

14. The charge and discharge control method according to claim 13,
wherein the controlling of the first relay, the second relay, and the DC/DC converter further comprises:
executing a fourth discharge stage configured to control the second relay to be turned on so that output power of the second battery pack is supplied to the load through both the DC/DC converter and the second relay when a difference between the output voltage of the DC/DC converter and the second pack voltage becomes equal to or less than a second predetermined value during an execution of the third discharge stage.

15. The charge and discharge control method according to claim 14,
wherein the controlling of the first relay, the second relay, and the DC/DC converter further comprises:
executing a fifth discharge stage configured to control the DC/DC converter to be turned off so that power supply from the second battery pack to the load through the DC/DC converter is cut off when an execution time of the fourth discharge stage reaches a second configured time.
